# FASCICULE DE BREVET EUROPEEN

(11) **EP 2 207 074 B1**
(45) Date de publication et mention de la délivrance du brevet: **16.03.2016**
(21) Numéro de dépôt: 10159686.4
(22) Date de dépôt: 14.11.2005
(51) Int. Cl.: G05G 1/40, B62D 21/18

(54) **Kart à pédalier réglable et plancher incliné**
Go-Kart mit einstellbarem Pedalmechanismus
Recreational vehicle comprising an adjustable pedal

(30) Priorité: 12.11.2004 FR 0412017
(43) Date de publication de la demande: 14.07.2010
(62) Demande divisionnaire de: 05817297.4
(73) Titulaire: SODIKART, 44200 Couëron (FR)
(72) Inventeur: Merian, Alain, 44450 La Chapelle Basse-Mer (FR); Gergaud, William, 44119 Treillières (FR)
(74) Mandataire: Vidon Brevets & Stratégie

(56) Documents cités:
- WO-A-2004/034170
- DE-A1- 10 027 980
- GB-A- 1 565 505
- JP-A- 61 050 840
- US-A- 2 620 042

## Description

### 1. Domaine de l'invention

Le domaine de l'invention est celui des véhicules de loisir utilisés par exemple sur pistes. Notamment, l'invention concerne le réglage de tels véhicules, notamment de karts, en fonction de la taille du pilote.

Les karts sont des véhicules motorisés exploités sur des pistes fermées, par opposition à des véhicules roulant sur route. Ces pistes sont extérieures (« outdoor ») ou couvertes (« indoor »).

On peut distinguer deux catégories principales de karts : les karts de location et les karts de loisir-compétition.

Les premiers sont exploités par des professionnels qui les louent à des particuliers (location au ticket), ou à des entreprises dans le cadre de séminaires de motivation du personnel ou autres.

Les seconds sont la plupart du temps la propriété de personnes privées, qui les utilisent pour leur loisir, en s'entraînant et en participant à des compétitions.

L'invention peut s'appliquer à toutes les catégories de karts, et plus généralement de véhicules de loisir. Cependant, elle s'applique en particulier aux karts de location. En effet, ces karts sont pilotés par de nombreuses personnes différentes, qui peuvent avoir des tailles très différentes. Il est alors particulièrement souhaitable d'adapter le kart à la taille de ses différents pilotes.

### 2. Art antérieur

### 2.1 Position du pilote du kart

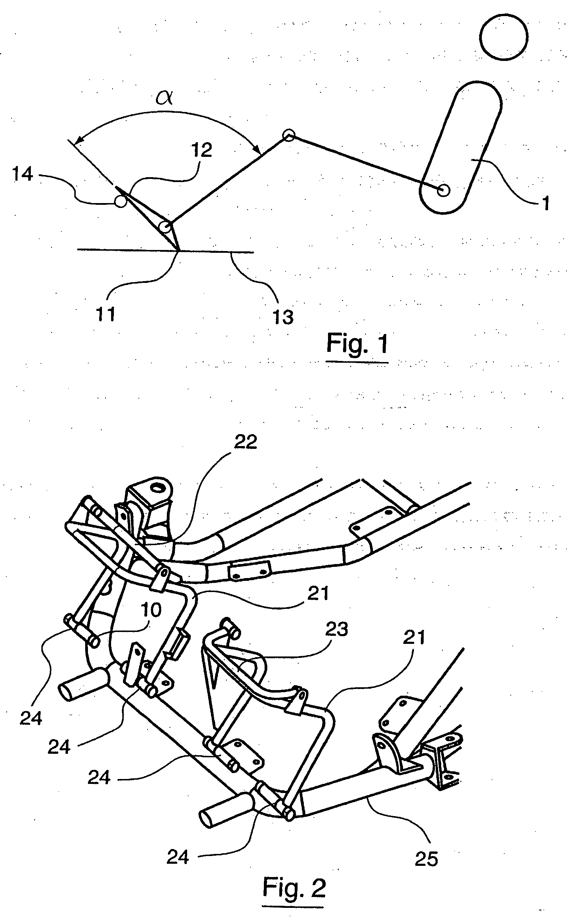

Comme le montre la figure 1, dans un kart, le pilote 1 est assis dans un siège, jambes fléchies. Son talon 11 repose sur un plancher 13 et le bout de son pied 12 appuie sur les pédales 14.

Les études effectuées par les inventeurs montrent que, dans cette position, le pied fait un angle α avec la jambe. Cet angle correspond à une position « naturelle » du pied, c'est à dire une position dans laquelle il n' y a pas crispation des muscles de la cheville, soit par extension, soit par fléchissement.

Le point de contact du pied avec la barre de pédale 14 est situé à la naissance du gros orteil. Dans l'action de freinage ou d'accélération, le pied du pilote est en rotation autour de son talon. Dans le même temps, la barre de pédale 14 est en rotation autour de l'axe de fixation de la pédale qui se trouve sensiblement à la hauteur du plancher 13. Si l'axe de rotation du pied, situé au niveau du talon, et l'axé de fixation de la pédale ne sont pas confondus, il y a un déplacement relatif de la barre de pédale par rapport au pied. Dans ce même cas, le travail de la force d'appui du pied n'est pas optimum car force et déplacement ne sont pas colinéaires.

Le pilote aura alors des difficultés pour appuyer sur la pédale, et sentira la pédale glisser sous son pied, ce qui n'est pas sécurisant ni confortable.

Il est donc souhaitable que la courbe que décrit la barre de pédale soit confondue avec la courbe que décrit le point d'appuie du pied sur la pédale. Cependant, si les tangentes à ces deux courbes ont un angle faible l'une par rapport à l'autre, le travail de la force d'appui est correct, et le déplacement relatif de la barre d'appui par rapport au pied reste très faible. Dans ce cas (angle faible), des rayons différents pour les cercles sont acceptables même s'ils sont dans un rapport de 2.

### 2.2 Solution à deux positions

Classiquement, un kart comporte deux pédales, une pédale d'accélération et une pédale de frein. Chacune des pédales est destinée à être actionnée par un pied du pilote.

Traditionnellement, sur un kart, le pédalier est fixe, et sa position est un compromis, au final mal adapté à la plupart des utilisateurs. Comme on peut le voir sur la figure 2 représentant un exemple de l'état de l'art, une pédale 21 est constituée d'un tube cintré. Elle est munie de deux charnières 24 qui permettent sa rotation suivant un axe situé sensiblement à la hauteur du plancher du véhicule ou du châssis du kart.

Elle est parfois munie d'un rabat (22, 23) qui permet de choisir la position de la barre d'appui de la pédale. Ainsi, on peut voir sur la figure 2 le rabat 22 qui est en position haute et le rabat 23 qui est en position basse. Le rabat 22 offre donc une barre d'appui qui se trouve à la fois plus proche du siège du kart (non représenté) et plus basse par rapport au plancher (non représenté) que s'il était en position haute comme le rabat 23.

La position basse du rabat correspond donc mieux à un pilote de petite taille, alors que la position haute correspond mieux à un pilote plus grand.

Cependant, ce type de pédale ne permet qu'un réglage entre deux positions.

Des rabats plus conséquents sont parfois utilisés pour adapter les pédales aux longueurs de jambe et aux pointures des personnes de petite taille (par exemple les enfants):

Quand la pédale est actionnée, cette option technique se traduit par une trajectoire de la barre du rabat qui peut être très différente de celle du point d'appui du pied.

Ainsi que cela est exposé plus haut, cette situation présente de nombreux inconvénients. En effet, dans ce cas, le travail de la force d'appui est faible. Il est donc plus difficile au pilote d'appuyer sur les pédales.

De plus le déplacement relatif pied - barre d'appui entraîne pour le pilote inconfort, mauvaise sensibilité et insécurité. Plus encore, il y a un risque d'échappement de la pédale (le pied passe sous la barre d'appui) avec une situation d'insécurité majeure par perte de contrôle du véhicule.

Ces inconvénients sont particulièrement pénalisants quand on s'adresse à des enfants ou à des pilotes non expérimentés.

Un inconfort, même modéré, peut beaucoup gêner un débutant au moment où il essaye de maîtriser les différents paramètres de sa machine.

Ces mêmes inconvénients sont connus des loueurs de karts qui remarquent que les enfants n'ont pas la force de freiner. L'origine est en fait un mauvais travail de la force d'appui.

Il a également été envisagé de monter de telles pédales sur un ensemble coulissant, pouvant se rapprocher ou s'éloigner à volonté du siège. Mais cette solution, qui ne permet pas de prendre en compte l'angle formé par le pied du pilote, n'offre pas non plus un confort satisfaisant.

### 2. Autres solutions de l'art antérieur.

Des solutions ont également été proposées dans le domaine de l'automobile, et par exemple dans le document WO2004/034170, qui enseigne de modifier la distance entre le plancher et les pédales, en fonction du recul du pédalier, afin de s'adapter à la taille du conducteur. Cependant, ces techniques ne sont pas transposables dans les véhicules de loisir, tels que les karts, du fait de leur complexité et de la forme des pédales. Le document US 2 620 042 présente un véhicule à moteur comprenant un pédalier réglable par rapport au siège. Le document DE: 100 27 980 présente également un mécanisme de pédalier réglabe pour un véhicule automobile. Il en est de même pour le document GB 1 565 505. Enfin, le document JP 61 050840 décrit un mécanisme de couplage d'une pédale de frein et d'une pédale d'accélérateur dans un pédalier.

### 3. Objectifs de l'invention.

L'invention a notamment pour objectif de pallier ces inconvénients de l'art antérieur.

Plus particulièrement, l'objectif de la présente invention est de proposer un dispositif qui permette d'optimiser le confort et l'ergonomie du pédalier, quelle que soit la taille du pilote.

L'invention a également pour objectif de permettre d'effectuer simplement ces réglages de façon discrète ou continue, sans modifier la cinématique du frein ni de l'accélérateur.

Un autre objectif est de fournir un tel dispositif, qui soit simple et peu coûteux à mettre en oeuvre, et facilement réglable.

### 4. Caractéristiques essentielles de l'invention.

Ces objectifs, ainsi que d'autres qui apparaîtront par la suite, sont atteints par un kart, comprenant un pédalier réglable selon la revendication 1.

Ainsi, le plancher forme un angle non nul avec l'axe de translation de ladite portion inférieur, de façon à éloigner le plancher de ladite portion inférieure, lorsque le pédalier est éloigné du siège, ce qui permet de régler la distance entre le plancher et la partie inférieure, simultanément au réglage de la position du pédalier.

Préférentiellement, ledit axe de translation et ledit plancher forment des angles sensiblement de même valeur, mais opposés, par rapport à l'horizontal.

Un tel kart peut comprendre en outre des moyens de réglage de l'écartement entre ladite portion inférieure et ladite portion supérieure et/ou ledit plancher.

Ainsi, les pédales de ce véhicule pourront s'adapter à différentes morphologies de pilotes. La pédale de frein et/ou d'accélérateur du véhicule de loisir (par exemple du kart) est donc réglable pour s'adapter à la taille du pilote (pointure notamment), et ergonomique, c'est-à-dire adaptée au mouvement du pied pour donner une sensibilité et une efficacité optimum dans l'action de freinage ou d' accélération, et dont le réglage se fait en une opération.

Selon un aspect avantageux de l'invention, le pédalier est également mobile par rapport au châssis du véhicule.

Le pédalier peut donc ainsi s'adapter également à la longueur des jambes du pilote.

Préférentiellement, le réglage de la position du pédalier et le réglage de l'écartement sont liés, et effectués simultanément.

En d'autres termes, le pédalier réglable, mobile par rapport au châssis du véhicule, est équipé d'au moins une pédale présentant deux portions d'appui du pied, une portion supérieure et une portion inférieure, est se caractérise par le fait qu'il comprend des moyens de modification de l'écartement entre la portion supérieure et la portion inférieure en fonction de la position du pédalier par rapport au châssis.

L'opération de réglage est alors particulièrement facile et rapide.

Selon un mode de réalisation avantageux de l'invention, le pédalier est monté coulissant le long d'une poutre solidaire du châssis du véhicule.

Préférentiellement, la poutre porte au moins une lumière de guidage, dans laquelle se déplace un ergot entraînant la portion supérieure, la portion inférieure étant fixe par rapport au pédalier.

Ce mode de réalisation permet de réaliser facilement un réglage simultané de la position du pédalier et de l'écartement.

Selon un mode de réalisation de l'invention, la lumière est rectiligne. Selon un autre mode de réalisation, elle suit une courbe prédéterminée.

On peut ainsi adapter à volonté la relation entre l'écartement et la position du pédalier.

De façon avantageuse, le véhicule comprend une bielle de réglage de longueur, dont une première extrémité est repliée au pédalier et une seconde extrémité est mobile par rapport à une plaque solidaire du châssis, le long de laquelle elle peut être bloquée.

Ainsi, le pilote du véhicule peut régler la position du pédalier alors qu'il est assis dans le véhicule.

Préférentiellement, ladite plaque présente une série de perforations, correspondant chacune à une position prédéterminée dudit pédalier, des moyens de blocage étant prévus pour pénétrer dans une desdites perforations.

Avantageusement, au moins une partie des moyens de freinage, comprenant une pompe de frein est solidaire du pédalier.

De façon préférentielle, le pédalier porte une pédale de frein et une pédale d'accélérateur.

Avantageusement, le pédalier porte des moyens interrompant ou réduisant une commande d'accélération reçue par la pédale d'accélérateur, lorsque la pédale de frein est activée.

Préférentiellement, le pédalier comprend une butée de garde et/ou une butée de fin de course, pour au moins une des pédales.

Selon un mode de réalisation particulier de l'invention, la portion inférieure d'appui du pied comprend un élément tubulaire autour duquel est monté un support de la portion supérieure d'appui du pied.

Avantageusement, le support de la portion supérieure d'appui du pied porte l'ergot, et la position de l'ergot dans la lumière de guidage contrôle une position angulaire du support par rapport au pédalier.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente de façon schématique la position d'un pilote de kart. Cette figure a déjà été commentée dans le préambule de la description ;
- la figure 2 illustre une solution de l'art antérieur. Cette figure a déjà été commentée dans le préambule de la description ;
- la figure 3 montre l'ensemble de pédalier du kart selon un premier mode de réalisation de l'invention, vue du dessous du kart ;
- la figure 4 montre une vue de détail des éléments du pédalier de la figure 3;
- la figure 5 montre le dispositif de réglage en longueur du pédalier de la figure 3 ;
- la figure 6 est une vue en coupe du pédalier de la figure 3 ;
- la figure 7 montre un pédalier selon un deuxième mode de réalisation de l'invention, dans une première position de réglage ;
- la figure 8 est une vue de côté du pédalier de la figure 7 ;
- la figure 9 montre le pédalier de la figure 7 dans une autre position de réglage.

### 6. Description d'un mode de réalisation de l'invention

### 6.1 Rappel du principe de l'invention

Tel que déjà mentionné précédemment, le principe de l'invention réside dans le fait d'équiper un véhicule ludique, par exemple un kart, d'un système permettant le réglage ergonomique des pédales le plancher du kart sous les pédales étant légèrement incliné vers l'avant par rapport à l'axe de la poutre portant le pédalier.

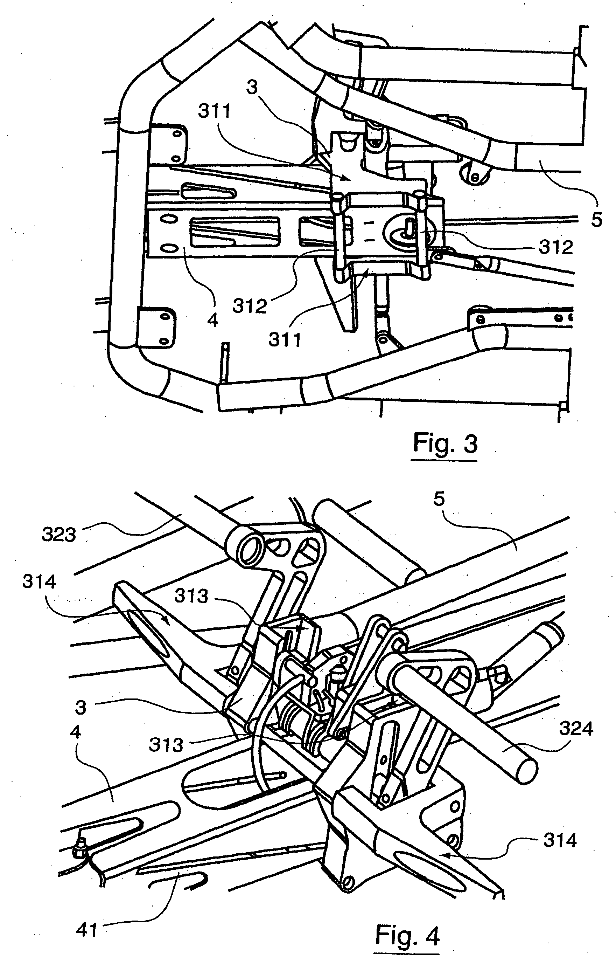

La description qui suit présente, en s'appuyant sur les figures 3 à 9, deux modes de réalisation de l'invention appliqué à un kart.

### 6.2 Le pédalier

Comme on peut le voir sur les figures 3 et 4, un ensemble pédalier 3 selon l'invention supporte à la fois les pédales de frein et d'accélérateur du kart. Ce pédalier 3 est mobile par rapport à la structure (ou châssis, ou cadre) 5 du kart. Plus précisément, il est monté coulissant sur une poutre centrale 4, qui est solidaire de la structuré 5 du kart.

### 6.2 Le régalage en longueur

Le réglage en longueur des pédales, ou réglage de l'éloignement des pédales par rapport au siège, se fait en faisant coulisser le pédalier 3 le long de la poutre 4.

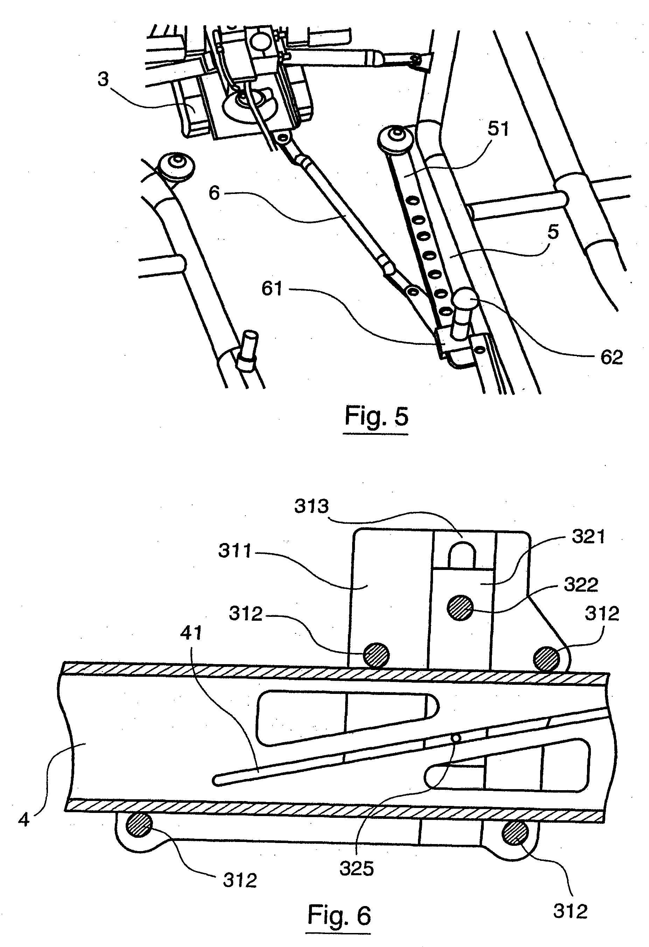

Ce réglage en longueur peut se faire et se verrouiller par le biais d'un dispositif de réglage en longueur tel que celui représenté par la figure 5.

Le dispositif de réglage comprend une bielle 6 reliant le pédalier 3 à une coulisse 61 pouvant être bloquée à diverses positions par un pion 62 sur une plaque perforée 51, solidaire du cadre 5.

Le pédalier peut ainsi être réglé facilement par le pilote lui-même, alors qu'il est installé dans le kart. Il peut se mettre en position de pilôtage, ajuster la position du pédalier 3, et verrouiller cette position grâce au pion de verrouillage 52 sans avoir à bouger, le pion 52 étant à portée de sa main. 6.3 Les éléments du pédalier.

Le pédalier 3 est constitué de deux sous-ensembles mobiles l'un par rapport à l'autre.

Le premier sous-ensemble est la base 31 du pédalier. Cette base coulisse sur la poutre centrale 4.

Cette base 31 est formée de deux flasques 311 liées entre eux par des axes 312. Ces flasques sont munis de gorges 313 destinées à recevoir le sous-ensemble 32. Ces gorges s'étendent sensiblement perpendiculairement à la direction de la poutre 4. Cette base du pédalier sert de support à deux cale-pieds 323 destinés à supporter les talons du pilote.

Le deuxième sous-ensemble est le porte-pédale 32 du pédalier. Ce sous-ensemble est monté coulissant par rapport à la base du pédalier, le long de la gorge 313. Ce porte-pédale 32 comprend des coulisseaux 321 qui se déplacent dans les gorges 313 des flasques. Ces coulisseaux 321 sont reliés par un axe 322 sur lequel sont montées les pédales 323 et 324 et les leviers agissant sur la pompe de frein et sur le câble d'accélérateur.

Les coulisseaux 321 sont munis d'ergots 325 engagés dans des fentes 41, ou lumières de guidage, s'étendant le long de la poutre centrale 4. Dans une position déterminée du pédalier 3 sur la poutre 4, ces ergots 325 empêchent la translation des coulisseaux 321 dans les gorges 313. Ils empêchent donc tout mouvement du porte-pédale par rapport à la base du pédalier.

### 6.4 Régalage aux dimensions du pied du pilote

Les fentes 41 dont sont munies les faces verticales de la poutre sont inclinées par rapport à l'axe de la poutre. Les ergots du porte-pédale sont engagés dans cette fente. En cas de déplacement du pédalier 3 le long de la poutre 4, les ergots suivent la fente 41, en entraînant le porte-pédale en coulissement par rapport à la base du pédalier.

Le déplacement du pédalier par rapport à la structure du kart entraîne donc un déplacement des pédales 324 (ou barre, ou portion, supérieure de l'accélérateur ou du frein) par rapport aux cale-pieds. Plus précisément, la disposition de la fente 41 fait que, quand le pédalier 3 est éloigné du siège du kart, les pédales 324 se soulèvent par rapport aux cale-pieds 314.

Ainsi, quand un pilote de grande taille, ayant de grandes jambes et de grands pieds, règle le pédalier pour qu'il soit éloigné du siège, les pédales se soulèvent au-dessus du cale-pied pour s'adapter aux grands pieds du pilote. Inversement, un petit pilote réglant le pédalier plus proche du siège aura ses pédales plus rapprochées des cale-pieds, et donc plus adaptées à la taille de son pied.

La fente 41 dans la poutre centrale 4 peut être rectiligne, comme représenté sur les figures. Cela permet de faire varier proportionnellement l'éloignement entre le siège et le pédalier et l'écartement entre les cale-pieds et les pédales. Au contraire, cette fente peut suivre une courbe quelconque, ce qui peut permettre de corréler au mieux la relation longueur de ambe - pointure.

De plus, le plancher (non représente sur les figures) du kart sous les pédales est légèrement incliné vers l'avant par rapport à l'axe de la poutre 4. Ainsi, quand le pédalier est déplacé vers l'avant du kart, l'espace entre le cale-pied et le plancher augmente. Les cale-pieds pourront alors être positionnés pour être à mi-hauteur des talons quelque soit la taille du pilote.

L'angle que forme le plancher par rapport à l'axe de la poutre 4 peut avantageusement être sensiblement égal à l'angle que forme l'axe de la poutre par rapport à la lumière, ou fente 41.

L'angle que forme le pied du pilote, une fois posé sur la pédale, peut également être ajusté en fonction de la taille du pilote. Il suffit pour cela de faire varier légèrement l'angle que forment les gorges 313 par rapport à l'axe de la poutre 5.

Ces éléments permettent d'obtenir, pour toute position du pédalier, une position du pied optimale et adaptée à la taille du pilote. On pourra ainsi conserver, pour tous les pilotes, le cale-pied à mi-hauteur du talon, la pédale au niveau de la naissance du gros orteil et un angle du pied par rapport à la jambe n'exigeant pas de contraction des muscles du pilote.

### 6.5 Deuxième mode de réalisation

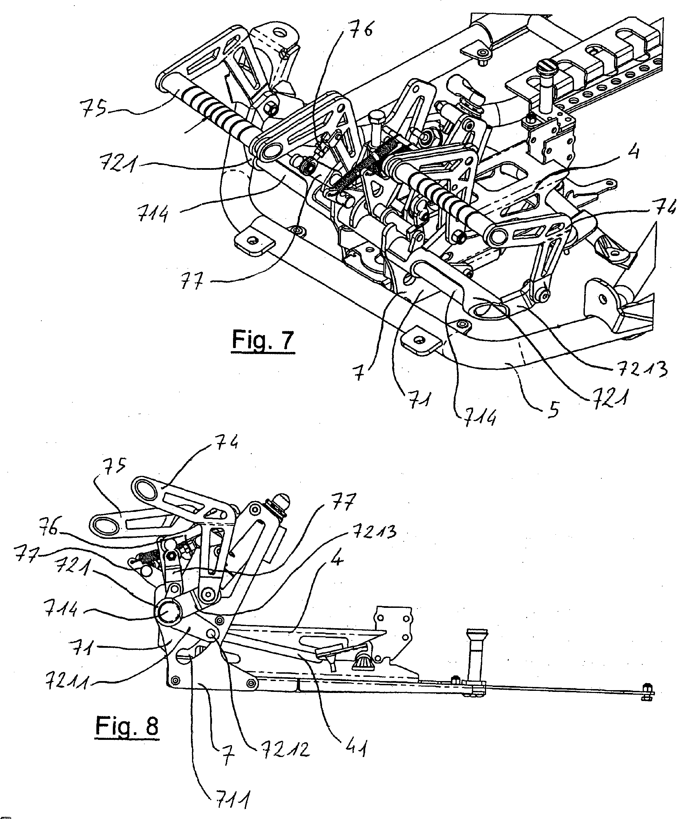

Les figure 7, 8 et 9 présentent un autre mode de réalisation de l'invention. On peut voir sur ces figures un ensemble pédalier 7 monté coulissant sur une poutre centrale 4, qui est solidaire de la structure 5 du kart.

Le pédalier 7 est constitué de deux sous-ensembles. Le premier sous-ensemble est la base 71 du pédalier. Cette base coulisse sur la poutre centrale 4. Deux tubes cale-pieds 714 sont fixés à cette base 71.

Le second sous-ensemble est constitué par les porte-pédale et les pédales mobiles. Des éléments porte-pédale 721 sont montés pivotants sur les tubes cale-pied 714. Chacun de ces éléments est constitué d'une portion tubulaire qui entoure le tube cale-pied, sur laquelle sont fixées trois bras. L'un de ces bras 7211 porte un ergot 7212. Cet ergot 7212 est engagé dans une lumière de guidage 71, définie dans la base 71 du pédalier, et dans une lumière de guidage 41 s'étendant le long de la poutre centrale 4.

La lumière de guidage 711 définie dans la base forme un arc de cercle centré sur l'élément porte-pédale 714 correspondant. Quand la base 71 du pédalier coulisse le long de la poutre centrale 4, le porte-pédale 721 se déplace par rapport à la base 71 du pédalier par un mouvement de rotation, l'ergot 7212 restant en permanence à l'intersection des deux lumières de guidage 711 et 41.

Dans une position déterminée du pédalier sur la poutre 4, ces ergots 7212 empêchent donc tout mouvement du porte-pédale par rapport à la base du pédalier.

Deux autres bras 7213, sur chaque porte-pédale, servent à soutenir les pédales 74 et 75. Ces pédales sont montées pivotantes sur les bras 7213. Chaque pédale est constituée d'une barre d'appui et de plaques latérales. Ces pédales sont également reliées, par une biellette 76, à des éléments de commande 77. Tant que les pédales ne sont pas actionnées, les éléments de commande 77 sont immobiles par rapport à la base 71 du pédalier.

Lors du réglage de la position du pédalier, par coulissement le long de la poutre 4, l'élément porté-pédale 721, la pédale 74 ou 75, la biellette 76 et l'ensemble formé par la base 71 du pédalier et les éléments de commande 77 forment un parallélogramme. L'ergot 7212, en se déplaçant dans les lumières de guidage, déforme ce parallélogramme, en déplaçant la pédale par rapport à la base du pédalier.

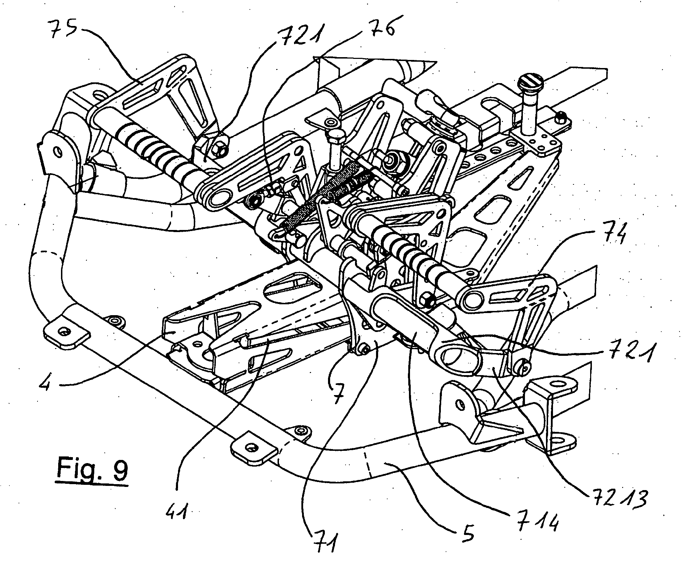

On peut ainsi voir la pédale 74 dans deux positions différentes par rapport au pédalier sur les figures 7 et 9. Les pédales peuvent ainsi s'adapter à la morphologie del'utilisateur. La pédale 75 est représentée actionnée sur les figures 7, 8 et 9. Quand une pédale est actionnée, les éléments de commande 77 se déplacent par rapport à la base 71 du pédalier, et l'ensemble ne forme plus un parallélogramme.

### 6.6 Autres caractéristiques et avantages

L'Homme du Métier pourra sans difficultés adapter à un dispositif de pédalier selon l'invention différents éléments classiques des pédales de kart.

Ainsi, des butées de garde et de fin de course peuvent avantageusement être fixées sur le coulisseau de la pédale d'accélérateur.

De même, la pompe de frein peut être fixée rigidement au coulisseau de la pédale de frein. Le maître-cylindre est donc solidaire du dispositif coulissant dans l'ensemble mobile, ce qui évite des variations de distance entre celui-ci et la pédale, lors des différents réglages.

Un système permettant de supprimer les gaz (quelle que soit la position de la pédale d'accélérateur) lorsque le frein est actionné peut être également intégré à ce dispositif de pédale ajustable. Cette technique peut bien sûr être mise en oeuvre indépendamment d'un pédalier réglable.

## Revendications

1. Kart comprenant un siège et un pédalier (3 ; 7) réglable équipé de deux pédales (74, 75) présentant chacune deux portions d'appui du pied, une portion supérieure (323, 324) et une portion inférieure (314 ; 714), et un plancher au voisinage de la ou desdites pédales,
**caractérisé en ce que** ledit pédalier (3 ; 7) est mobile coulissant le long d'une poutre centrale (4) solidaire du châssis (5) du véhicule, et **en ce que** ledit plancher et l'axe de translation de ladite portion inférieure forment des angles sensiblement de même valeur, mais opposés, par rapport à l'horizontale, de façon à augmenter l'espace entre ledit plancher et ladite portion inférieure, lorsque ledit pédalier est éloigné dudit siège, lorsque ledit pédalier est déplacé vers l'avant du kart.

2. Kart selon la revendication 1, **caractérisé en ce qu'**il comprend des moyens de réglage de l'écartement entre ladite portion inférieure et ladite portion supérieure et/ou ledit plancher.

3. Kart selon la revendication 2, **caractérisé en ce que** le réglage de la position dudit pédalier et le réglage de l'écartement sont liés, et effectués simultanément.

4. Kart selon l'une quelconque des revendications 1 à 3, **caractérisé en ce que** ladite poutre porte au moins une lumière de guidage (41), dans laquelle se déplace un ergot (7212) entraînant ladite portion supérieure, ladite portion inférieure étant fixe par rapport audit pédalier.

5. Kart selon la revendication 4, **caractérisé en ce que** ladite lumière est rectiligne.

6. Kart selon la revendication 5, **caractérisé en ce que** ladite lumière et ledit plancher forment des angles sensiblement de même valeur, mais opposés, par rapport à l'horizontale.

7. Kart selon la revendication 4, **caractérisé en ce que** ladite lumière suit une courbe prédéterminée.

8. Kart selon l'une quelconque des revendications 1 à 7, **caractérisé en ce qu'**il comprend une bielle (6) de réglage de longueur, dont une première extrémité est reliée audit pédalier et une seconde extrémité est mobile par rapport à une plaque (51) solidaire du châssis, le long de laquelle elle peut être bloquée.

9. Kart selon la revendication 8, **caractérisé en ce que** ladite plaque présente une série de perforations, correspondant chacune à une position prédéterminée dudit pédalier, des moyens de blocage (52) étant prévus pour pénétrer dans une desdites perforations.

10. Kart selon l'une quelconque des revendications 1 à 9, **caractérisé en ce qu'**au moins une partie des moyens de freinage, comprenant une pompe de frein est solidaire dudit pédalier.

11. Kart selon l'une quelconque des revendications 1 à 10, **caractérisé en ce que** ledit pédalier porte une pédale de frein et une pédale d'accélérateur.

12. Kart selon la revendication 11, **caractérisé en ce que** ledit pédalier porte des moyens interrompant ou réduisant une commande d'accélération reçue par ladite pédale d'accélérateur, lorsque ladite pédale de frein est activée.

13. Kart selon l'une quelconque des revendications 1 à 12, **caractérisé en ce qu'**il comprend une butée de garde et/ou une butée de fin de course, pour au moins une desdites pédales.

14. Kart selon l'une quelconque des revendications 1 à 13, **caractérisé en ce que** ladite portion inférieure d'appui du pied comprend un élément tubulaire autour duquel est monté un support de ladite portion supérieure d'appui du pied.

## Patentansprüche

1. Go-Kart, der einen Sitz und einen einstellbaren Pedalmechanismus (3; 7) umfasst, der mit zwei Pedalen (74, 75) ausgestattet ist, die jeweils zwei Auflageabschnitte des Fußes, einen oberen Abschnitt (323, 324) und einen unteren Abschnitt (314; 714) sowie einen Fußboden in der Nähe des oder der Pedale aufweisen,
**dadurch gekennzeichnet, dass** der Pedalmechanismus (3; 7) mobil entlang eines zentralen Balkens (4), der fest mit dem Chassis (5) des Fahrzeugs verbunden ist, beweglich ist, und dass der Fußboden und die Verschiebungsachse des unteren Abschnitts Winkel bilden, die im Wesentlichen denselben Wert haben, aber in Bezug zu der Horizontalen derart entgegengesetzt sind, dass der Raum zwischen dem Fußboden und dem unteren Abschnitt, wenn der Pedalmechanismus von dem Sitz entfernt ist, wenn der Pedalmechanismus zur Vorderseite des Go-Kart bewegt wird, erhöht wird.

2. Go-Kart nach Anspruch 1, **dadurch gekennzeichnet, dass** er Einstellmittel des Abstands zwischen dem unteren Abschnitt und dem oberen Abschnitt und/oder dem Fußboden umfasst.

3. Go-Kart nach Anspruch 2, **dadurch gekennzeichnet, dass** die Stellung der Position des Pedalmechanismus und die Einstellung des Abstandes verbunden sind und gleichzeitig ausgeführt werden.

4. Go-Kart nach einem der Ansprüche 1 bis 3, **dadurch gekennzeichnet, dass** der Balken mindestens ein Führungslangloch (41) trägt, in dem sich ein Dorn (7212) bewegt, der den oberen Abschnitt mitnimmt, wobei der untere Abschnitt in Bezug zu dem Pedalmechanismus stationär ist.

5. Go-Kart nach Anspruch 4, **dadurch gekennzeichnet, dass** das Langloch rechteckig ist.

6. Go-Kart nach Anspruch 5, **dadurch gekennzeichnet, dass** das Langloch und der Fußboden Winkel bilden, die im Wesentlichen denselben Wert aber entgegengesetzt in Bezug zu der Horizontalen haben.

7. Go-Kart nach Anspruch 4, **dadurch gekennzeichnet, dass** das Langloch einer vorbestimmten Kurve folgt.

8. Go-Kart nach einem der Ansprüche 1 bis 7, **dadurch gekennzeichnet, dass** er ein Einstellpleuel (6) der Länge umfasst, von dem ein erstes Ende mit dem Pedalmechanismus verbunden ist und ein zweites Ende in Bezug zu der Platte (51), die fest mit dem Chassis verbunden ist, mobil ist, entlang welcher es blockiert werden kann.

9. Go-Kart nach Anspruch 8, **dadurch gekennzeichnet, dass** die erste Platte eine Reihe von Perforierungen aufweist, die jeweils einer vorbestimmten Position des Pedalmechanismus entsprechen, wobei Blockierungsmittel (52) vorgesehen sind, um in eine der Perforierungen einzudringen.

10. Go-Kart nach einem der Ansprüche 1 bis 9, **dadurch gekennzeichnet, dass** mindestens ein Teil der Bremsmittel, die eine Bremspumpe umfassen, fest mit dem Pedalmechanismus verbunden ist.

11. Go-Kart nach einem der Ansprüche 1 bis 10, **dadurch gekennzeichnet, dass** der Pedalmechanismus ein Bremspedal und ein Gaspedal umfasst.

12. Go-Kart nach Anspruch 11, **dadurch gekennzeichnet, dass** der Pedalmechanismus Mittel trägt, die einen Beschleunigungsbefehl, der von dem Gaspedal empfangen wird, unterbrechen oder verringern, wenn das Bremspedal betätigt wird.

13. Go-Kart nach einem der Ansprüche 1 bis 12, **dadurch gekennzeichnet, dass** er einen Abstandsanschlag und/oder einen Endanschlag für mindestens eines der Pedale umfasst.

14. Go-Kart nach einem der Ansprüche 1 bis 13, **dadurch gekennzeichnet, dass** der untere Abschnitt zum Aufliegen des Fußes ein röhrenförmiges Element umfasst, um welches ein Träger des oberen Abschnitts zum Aufliegen des Fußes montiert ist.

## Claims

1. Kart comprising a seat and an adjustable pedal unit (3; 7) equipped with two pedals (74, 75) each having two foot-supporting portions, an upper portion (323, 324) and a lower portion (314; 714), and a floor in the vicinity of the said pedal or pedals,
**characterised in that** the said pedal unit (3; 7) is movable in a sliding manner along a central beam (4) which is integral with the chassis (5) of the vehicle, and **in that** the said floor and the axis of translation of the said lower portion form angles which are substantially of the same value but are opposed, in relation to the horizontal, in such a way as to increase the space between the said floor and the said lower portion when the said pedal unit is moved away from the said seat when the said pedal unit is displaced towards the front of the kart.

2. Kart according to Claim 1, **characterised in that** it comprises means for adjusting the gap between the said lower portion and the said upper portion and/or the said floor.

3. Kart according to Claim 2, **characterised in that** the adjustment of the position of the said pedal unit and the adjustment of the gap are linked, and are carried out simultaneously.

4. Kart according to any one of Claims 1 to 3,
**characterised in that** the said beam carries at least one guide slot (41) within which a pin (7212), which draws along said upper portion, is displaced, the said lower portion being fixed in relation to the said pedal unit.

5. Kart according to Claim 4, **characterised in that** the said slot is straight.

6. Kart according to Claim 5, **characterised in that** the said slot and the said floor form angles which are substantially of the same value but are opposed in relation to the horizontal.

7. Kart according to Claim 4, **characterised in that** the said slot follows a predetermined curve.

8. Kart according to any one of Claims 1 to 7,
**characterised in that** it comprises a length-adjusting rod (6), of which a first end is connected to the said pedal unit and a second end is movable in relation to a plate (51) which is integral with the chassis and along which said second end can be immobilised.

9. Kart according to Claim 8, **characterised in that** the said plate has a series of perforations, each corresponding to a predetermined position of the said pedal unit, immobilising means (52) being provided to pass into one of the said perforations.

10. Kart according to any one of Claims 1 to 9,
**characterised in that** at least part of the braking means, comprising a brake pump, is integral with the said pedal unit.

11. Kart according to any one of Claims 1 to 10,
**characterised in that** the said pedal unit carries a brake pedal and an accelerator pedal.

12. Kart according to Claim 11, **characterised in that** the said pedal unit carries means which interrupt or reduce an acceleration command received by the said accelerator pedal, when the said brake pedal is activated.

13. Kart according to any one of Claims 1 to 12,
**characterised in that** it comprises a guard stop and/or an end-of-travel stop for at least one of the said pedals.

14. Kart according to any one of Claims 1 to 13,
**characterised in that** the said lower foot-supporting portion comprises a tubular element around which a support for the said upper foot-supporting portion is mounted.
